# FASCICULE DE BREVET EUROPEEN

(11) **EP 3 544 107 B1**
(45) Date de publication et mention de la délivrance du brevet: **23.12.2020**
(21) Numéro de dépôt: 19164603.3
(22) Date de dépôt: 22.03.2019
(51) Int. Cl.: H01M 10/052, H01M 10/625, H01M 10/617, H01M 10/613, H01M 10/6568, H01M 2/10

(54) **BOÎTIER DE SYSTÈME DE REFROIDISSEMENT DE CELLULES DE BATTERIE D'ACCUMULATEURS**
GEHÄUSE EINES KÜHLSYSTEMS FÜR AKKUMULATOREN-BATTERIEZELLE
HOUSING FOR COOLING SYSTEM FOR STORAGE BATTERY CELLS

(30) Priorité: 23.03.2018 FR 1852533
(43) Date de publication de la demande: 25.09.2019
(73) Titulaire: RENAULT s.a.s., 92100 Boulogne-Billancourt (FR)
(72) Inventeur: Tourret, Thierry, 78950 Gambais (FR)

(56) Documents cités:
- EP-A1- 2 506 336
- EP-A1- 2 790 263
- EP-A1- 3 032 607
- CH-A1- 703 973
- YONGLU LIU ET AL: "Experimental Research on a Honeycomb Microchannel Cooling System", IEEE TRANSACTIONS ON COMPONENTS, PACKAGING AND MANUFACTURING TECHNOLOGY, IEEE, USA, vol. 1, no. 9, 30 août 2011 (2011-08-30), - 21 septembre 2011 (2011-09-21), pages 1378-1386, XP011386875, ISSN: 2156-3950, DOI: 10.1109/TCPMT.2011.2162331

## Description

### DOMAINE TECHNIQUE AUQUEL SE RAPPORTE L'INVENTION

La présente invention concerne de manière générale le domaine du refroidissement des cellules de batterie d'accumulateurs.

Elle concerne plus particulièrement un boîtier de système de refroidissement de cellules de batterie d'accumulateurs, comprenant :
- des parois externes qui délimitent un logement étanche pour lesdites cellules, et qui présente une ouverture d'entrée et une ouverture de sortie pour fluide caloporteur, et
- une paroi interne délimitant un conduit de circulation pour le fluide caloporteur, ce conduit de circulation communiquant avec l'ouverture d'entrée.

Elle concerne aussi un système de refroidissement pour cellules de batterie d'accumulateurs, comprenant :
- un boîtier tel que précité, et
- un circuit de refroidissement qui comprend une pompe et un échangeur thermique et qui est connecté, en amont de la pompe et de l'échangeur thermique, à l'ouverture de sortie du boîtier, et, en aval de la pompe et de l'échangeur thermique, à l'ouverture d'entrée du boîtier.

Elle concerne aussi un pack de batterie d'accumulateurs, comprenant :
- un système de refroidissement tel que précité, et
- des cellules de batteries d'accumulateurs logées dans le boîtier du système de refroidissement.

### ARRIERE-PLAN TECHNOLOGIQUE

Les véhicules automobiles à propulsion électrique, incluant les véhicules à propulsion hybride thermique et électrique, sont généralement équipés d'un moteur électrique alimenté en courant par un pack d'accumulateurs. Classiquement, un tel pack d'accumulateurs loge une pluralité de modules de batterie, lesquels intègrent chacun une pluralité de cellules de batterie d'accumulateurs de tailles réduites.

Le nombre de cellules de batterie d'accumulateurs est calculé pour que le moteur électrique puisse développer un couple et une puissance suffisants pour propulser le véhicule pendant une durée prédéterminée.

Lorsque le pack d'accumulateurs alimente le moteur électrique ou pendant la recharge du pack d'accumulateurs, une part importante de l'énergie développée ou reçue par les cellules de batterie d'accumulateurs est libérée sous forme de chaleur. Il est alors nécessaire de refroidir ces cellules de batterie d'accumulateurs de manière que leur température n'excède jamais un seuil (qui est de l'ordre de 60 degrés Celsius) au-delà duquel elles risqueraient de vieillir prématurément ou même de se détériorer de manière irréversible.

On connaît à cet effet du document US8329325 un système de refroidissement des cellules de batterie d'accumulateurs.

Dans ce document, les cellules de batterie sont brumisées à l'aide d'un ventilateur. Plus précisément, le ventilateur envoie de très fines gouttelettes (on peut parler de micro-gouttelettes), d'un liquide caloporteur sur les modules de batteries. Une partie de la chaleur des modules de batterie est alors transférée aux micro-gouttelettes qui coulent le long des modules de batteries. Les micro-gouttelettes sont ensuite récupérées et le fluide caloporteur est refroidi à l'extérieur du boîtier avant d'être renvoyé dans le boîtier.

Un tel système de refroidissement n'est cependant pas assez performant et ne permet pas de réguler efficacement la température des cellules de batterie.

### OBJET DE L'INVENTION

Afin de remédier à l'inconvénient précité de l'état de la technique, la présente invention propose un boîtier de système de refroidissement tel que défini dans l'introduction, dans lequel la paroi interne présente une pluralité de trous qui débouchent dans ledit logement, caractérisé en ce que les trous présentent des diamètres compris entre 1 mm et 3 mm, tels que le fluide caloporteur forme des gouttes lorsqu'il traverse les trous.

Ainsi le fluide caloporteur est délivré vers des zones différentes des cellules de batterie, ce qui assure un refroidissement plus homogène de ces cellules.

Par ailleurs, grâce à ces trous, le fluide caloporteur peut être délivré sous forme de gouttes. Les gouttes de fluide caloporteur formées selon l'invention présentent une grande surface spécifique qui leur permet d'absorber efficacement la chaleur des cellules de batteries, c'est-à-dire rapidement et en grande quantité. Ainsi l'échange de chaleur est-il plus efficace et les cellules sont-elles mieux refroidies.

D'autres caractéristiques non limitatives et avantageuses du boîtier conforme à l'invention, prises individuellement ou selon toutes les combinaisons techniquement possibles, sont les suivantes :
- il est prévu au moins deux supports pour deux modules de batterie qui logent chacun une pluralité de cellules de batterie d'accumulateurs, lesdits supports étant positionnés de telle sorte que les modules de batterie soient écartés l'un de l'autre par un espace, et dans lequel l'un au moins desdits trous débouchent dans l'axe dudit espace,
- la paroi interne est plate et délimite avec une première des parois externes ledit conduit de circulation,
- la paroi interne présentant une longueur et une largeur, les trous sont répartis dans la longueur et dans la largeur de la paroi interne,
- la paroi interne et la première paroi externe sont plates et parallèles,
- il est prévu une seconde paroi interne qui présente au moins un orifice et qui délimite avec une seconde des parois externes un second conduit de circulation pour le fluide caloporteur qui communique avec l'ouverture de sortie,
- la seconde paroi interne et la seconde paroi sont plates et parallèles.

L'invention propose également un système de refroidissement pour cellules de batterie d'accumulateurs tel que défini en introduction, comprenant un boîtier tel que précité.

L'invention propose également un pack de batterie d'accumulateurs tel que défini en introduction, comprenant un système de refroidissement tel que précité.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1, 2 et 4 représentent des vues schématiques en coupe de trois modes de réalisation d'un pack de batterie d'accumulateurs selon l'invention, et
- la figure 3 une vue schématique en perspective du boîtier du pack de la figure 2 et d'un module de batterie logé dans ce boîtier.

En préliminaire on notera que les éléments identiques ou similaires des différents modes de réalisation de l'invention représentés sur les différentes figures seront, dans la mesure du possible, référencés par les mêmes signes de référence et ne seront pas décrits à chaque fois.

De plus, les modes de réalisation de l'invention sont décrits dans un référentiel géocentrique. Ainsi, considérant l'invention dans la position dans laquelle elle sera mise en œuvre, les termes « supérieur » et « inférieur » sont à interpréter selon leurs définitions courantes dans le référentiel géocentrique.

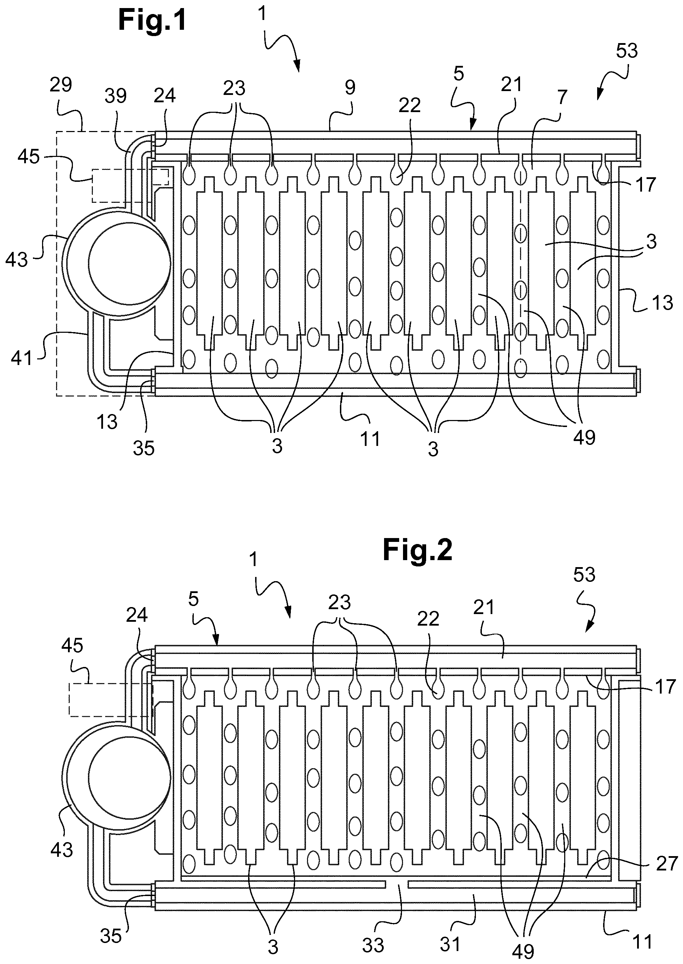

Sur la figure 1, on a représenté un premier mode de réalisation d'un pack d'accumulateurs 53 destiné à équiper un véhicule automobile à propulsion électrique afin d'alimenter en courant électrique le moteur électrique de ce véhicule.

Ce pack d'accumulateurs 53 comporte ici des modules de batterie 3 (logeant chacun des cellules de batteries d'accumulateurs), et un système de refroidissement 1 de ces modules de batterie 3.

Le système de refroidissement 1 est notamment conçu pour stocker les modules de batterie 3 et pour assurer leur maintien à une température inférieure à un seuil. Il comporte à cet effet un boîtier 5 et un circuit de refroidissement 29.

Le boîtier 5 comprend des parois externes 9, 11, 13 qui délimitent un logement 7 étanche dans lequel sont disposés les modules de batterie 3. Le boîtier 5 présente une ouverture d'entrée 24 et une ouverture de sortie 35 pour la circulation d'un fluide caloporteur 22.

Le boîtier 5 comprend en outre une paroi interne 17 qui délimite un conduit d'entrée 21 pour le fluide caloporteur 22, lequel conduit d'entrée 21 communique avec l'ouverture d'entrée 24.

Selon une caractéristique particulièrement avantageuse de l'invention, la paroi interne 17 présente une pluralité de trous 23 débouchant dans le logement 7. La pluralité de trous 23 permet ainsi la circulation du fluide caloporteur 22 depuis le conduit d'entrée 21 vers le logement 7.

Comme cela est représenté sur la figure 1, le boîtier 5 comprend plus précisément ici six parois externes, dont une paroi supérieure 9, une paroi inférieure 11, et quatre parois latérales 13 joignant la paroi supérieure 9 à la paroi inférieure 11. Le boîtier 5 ici représenté présente ainsi une forme de parallélépipède rectangle.

Comme le montre la figure 2, l'ouverture de sortie 35 est ici située dans l'une des parois latérales 13, à proximité de son bord inférieur. L'ouverture d'entrée 24 est ici située dans cette même paroi latérale 13, à proximité de son bord supérieur.

On pourrait prévoir que la paroi interne percée de trous forme une sorte de tube replié en serpentin au-dessus des modules de batterie 13.

Toutefois, ici, et de façon préférentielle, la paroi interne 17 est plate et parallèle à la paroi externe supérieure 9, de façon à former avec celle-ci une paroi double délimitant le conduit d'entrée 21. On comprend donc que ce conduit d'entrée 21 présente une forme de parallélépipède rectangle de faible épaisseur.

Les trous 23 sont alors répartis dans la longueur L et dans la largeur l de la paroi interne 17, de façon à pouvoir arroser uniformément les modules de batterie 3 placés en dessous d'elle.

La pluralité de trous 23 permet ici l'écoulement du fluide caloporteur 22 dans le logement 7 sous forme de gouttes. En effet, les trous 23 présentent des formes et dimensions adaptées pour former des gouttes de fluide caloporteur 22.

Les trous sont plus précisément ici de formes circulaires et de diamètres compris entre 1 et 3 mm. Les diamètres exacts de ces trous 23 sont déterminés en fonction de propriétés physiques du fluide caloporteur 22 circulant dans le conduit d'entrée 21 afin de permettre la formation de gouttes de fluide caloporteur 22.

Le fluide caloporteur 22 est par exemple un fluide du type 3M Novec.

La paroi inférieure 11 sert alors de réceptacle pour recevoir le fluide caloporteur 22.

La position de l'ouverture de sortie 35 permet alors au fluide caloporteur 22 présent sur cette paroi inférieure 11 de refluer vers celle-ci.

Le risque est alors que, sous l'effet des forces d'inertie qui s'exercent sur lui lorsque le véhicule roule, le fluide caloporteur 22 ne reflue pas toujours vers cette ouverture de sortie 35.

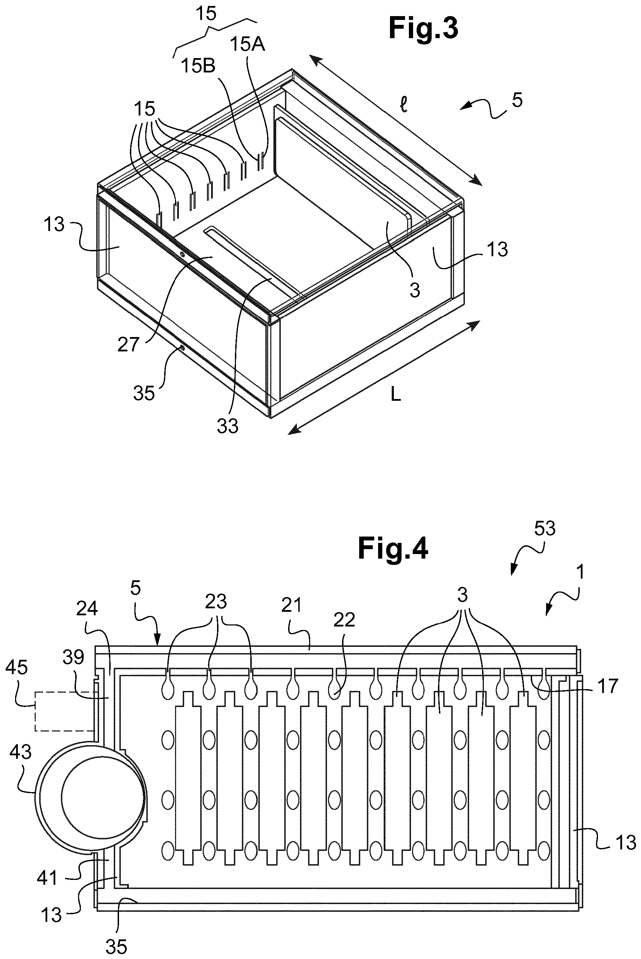

Afin de réduire ce risque, comme le montrent les figures 2 et 3, on peut prévoir de placer une seconde paroi interne 27 dans le fond du logement 7 du boîtier 5.

Dans ce second mode de réalisation, la seconde paroi interne 27 présente une forme de plaque plane rectangulaire qui comporte en son centre un unique orifice 33 rectangulaire. Cette seconde paroi interne 27 s'étend parallèlement à la paroi externe inférieure 11 et délimite avec celle-ci un second conduit 31 de circulation pour le fluide caloporteur 22, permettant d'éviter que le fluide ne remonte dans le logement 7 lorsque le véhicule roule.

Dans tous les modes de réalisation, il est prévu dans le boîtier 5 des supports pour maintenir les modules de batterie 3 en position fixe. Comme le montre la figure 3, chaque support 15 comprend par exemple, en saillie de la face intérieure de deux parois latérales 13 opposées, deux nervures 15A, 15B qui s'étendent verticalement. Ces nervures permettent non seulement de bloquer les modules de batterie 3, mais aussi de guider leur coulissement vers le fond du logement 7 lors de leur installation dans le boîtier 5 (avant que la paroi supérieure 9 ne soit rapportée sur le reste du boîtier pour fermer hermétiquement le boîtier 5).

Les supports 15 sont configurés de façon à ce que les modules de batterie 3 soient écartés deux à deux par un espace 49 visible sur les figures 1 et 2.

De façon avantageuse, les trous 23 sont alors alignés dans l'axe de ces espaces 49, de façon à ce que les gouttes d'eau tombent sur les faces principales des modules de batterie 3.

Les trous 23 sont alors plus précisément répartis sur des lignes parallèles qui s'étendent au-dessus des espaces 49.

Le circuit de refroidissement 29 est prévu pour mettre en mouvement et refroidir le liquide caloporteur 22.

Ce circuit de refroidissement 29 comprend une canalisation d'entrée 39 débouchant dans le conduit d'entrée 21 du boîtier 5 à travers l'ouverture d'entrée 24, et une canalisation de sortie 41 prenant naissance dans le logement 7 (figure 1) ou dans le second conduit 31 (figure 2) à travers l'ouverture de sortie 35.

Le circuit de refroidissement 29 est muni d'une pompe 43. Comme cela est illustré, la pompe 43 peut être de type à excentrique, mais on peut envisager d'utiliser d'autres types de pompes. La pompe 43 permet de mettre en circulation le fluide caloporteur 22 dans le système de refroidissement 1.

La pompe 43 permet au système de refroidissement 1 d'atteindre un débit dans le conduit d'entrée 21 de l'ordre de 20 litres par minute. Ce débit est en effet bien adapté à la formation de gouttes lorsque le fluide caloporteur traverse les trous 23.

Dans les deux modes de réalisation représentés sur les figures 1 à 3, la pompe est fixée au boîtier 5, sur la face externe de celui-ci. Plus précisément, le socle de la pompe est formé d'une seule pièce avec l'une des parois latérales 13 du boîtier 5.

Le circuit de refroidissement 29 comprend en outre un échangeur thermique 45 (visible sur les figures 1 et 2). L'échangeur thermique 45 permet un échange entre le fluide caloporteur 22 et une source froide (typiquement l'air extérieur, ou un autre liquide). Ainsi, lors de son passage dans le circuit de refroidissement 29, le fluide caloporteur 22 est refroidi grâce à l'échangeur thermique 45.

On peut décrire à présent le fonctionnement du système de refroidissement 1.

Lorsque la pompe 43 est démarrée, le fluide caloporteur 22 froid est refoulé dans le conduit d'entrée 21. Le fluide caloporteur 22 présente alors une température initiale très inférieure à la température des cellules de batterie 47. Sous l'effet de la gravité terrestre, le fluide caloporteur 22 s'écoule dans le logement 7 sous forme de gouttes. Les gouttes de fluide caloporteur 22 s'écoulent dans les espaces 49, le long des modules de batterie 3. Les gouttes de fluide caloporteur 22 présentent une grande surface spécifique qui leur permet de bien absorber la chaleur des modules de batteries 3, c'est-à-dire rapidement et en grande quantité. Grâce à ce transfert de chaleur vers les gouttes de fluide caloporteur 22, la température des modules de batterie 3 baisse rapidement.

Le fluide caloporteur 22 réchauffé s'écoule ensuite jusqu'à la paroi inférieure 11.

La pompe 43 aspire alors le fluide caloporteur 22 réchauffé dans la canalisation de sortie 41, à travers l'ouverture de sortie 35. Puis le fluide caloporteur 22 réchauffé entre dans l'échangeur thermique 45 qui absorbe une partie de sa chaleur.

Sur la figure 4, on a représenté un troisième mode de réalisation de l'invention dans lequel les parois latérales 13 sont doublées afin de délimiter un espace faisant office de canalisation d'entrée 39 et de sortie 41. Dans ce mode de réalisation, la pompe 43 est placée dans cet espace et l'échangeur thermique 45 est fixé sur le boîtier 5.

## Revendications

1. Boîtier (5) de système de refroidissement (1) de cellules de batterie d'accumulateurs, comprenant :
- des parois externes (9, 11, 13) qui délimitent un logement (7) étanche pour lesdites cellules, et qui présente une ouverture d'entrée (24) et une ouverture de sortie (35) pour fluide caloporteur (22), et
- une paroi interne (17) délimitant un conduit de circulation (21) pour le fluide caloporteur (22) qui communique avec l'ouverture d'entrée (24),
- la paroi interne (17) présentant une pluralité de trous (23) qui débouchent dans ledit logement (7),
Caractérisé ne ce que les trous (23) présentent des diamètres compris entre 1 mm et 3 mm, tels que le fluide caloporteur (22) forme des gouttes lorsqu'il traverse les trous (23).

2. Boîtier (5) selon l'une des revendications précédentes, dans lequel il est prévu au moins deux supports (15) pour deux modules de batterie (3) qui logent chacun une pluralité de cellules de batterie d'accumulateurs, lesdits supports (15) étant positionnés de telle sorte que les modules de batterie (3) soient écartés l'un de l'autre par un espace (49), et dans lequel l'un au moins desdits trous (23) débouchent dans l'axe dudit espace (49).

3. Boîtier (5) selon l'une des revendications précédentes, dans lequel la paroi interne (17) est plate et délimite avec une première des parois externes (9, 11, 13) ledit conduit de circulation (21), et dans lequel, la paroi interne (17) présentant une longueur (L) et une largeur (l), les trous (23) sont répartis dans la longueur (L) et dans la largeur (I) de la paroi interne (17).

4. Boîtier (5) selon la revendication précédente, dans lequel la paroi interne (17) et la première paroi externe (9) sont plates et parallèles.

5. Boîtier (5) selon l'une des revendications précédentes, dans lequel il est prévu une seconde paroi interne (27) qui présente au moins un orifice (33) et qui délimite avec une seconde des parois externes (11) un second conduit (31) de circulation pour le fluide caloporteur (22) qui communique avec l'ouverture de sortie (35).

6. Boîtier (5) selon la revendication précédente, dans lequel la seconde paroi interne (27) et la seconde paroi externe (11) sont plates et parallèles.

7. Système de refroidissement (1) pour cellules de batterie d'accumulateurs, comprenant :
- un boîtier (5) conforme à l'une des revendications précédentes, et
- un circuit de refroidissement (29) qui comprend une pompe (43) et un échangeur thermique (45) et qui est connecté, en amont de la pompe (43) et de l'échangeur thermique (45), à l'ouverture de sortie (35) du boîtier (5), et, en aval de la pompe (43) et de l'échangeur thermique (45), à l'ouverture d'entrée (24) du boîtier (5).

8. Pack de batterie d'accumulateurs (53), comprenant :
- un système de refroidissement (1) conforme à la revendication précédente, et
- des cellules de batteries d'accumulateurs logées dans le boîtier (5) du système de refroidissement (1).

## Patentansprüche

1. Gehäuse (5) eines Kühlsystems (1) von Akkumulatorenbatteriezellen, das enthält:
- Außenwände (9, 11, 13), die ein dichtes Fach (7) für die Zellen begrenzen, und das eine Eingangsöffnung (24) und eine Ausgangsöffnung (35) für ein Wärmeträgerfluid (22) aufweist, und
- eine Innenwand (17), die einen Strömungskanal (21) für das Wärmeträgerfluid (22) begrenzt, der mit der Eingangsöffnung (24) in Verbindung steht,
- wobei die Innenwand (17) eine Vielzahl von Löchern (23) aufweist, die in das Fach (7) münden,
**dadurch gekennzeichnet, dass** die Löcher (23) Durchmesser zwischen 1 mm und 3 mm aufweisen, so dass das Wärmeträgerfluid (22) Tropfen formt, wenn es die Löcher (23) durchquert.

2. Gehäuse (5) nach einem der vorhergehenden Ansprüche, wobei mindestens zwei Träger (15) für zwei Batteriemodule (3) vorgesehen sind, die je eine Vielzahl von Akkumulatorenbatteriezellen aufnehmen, wobei die Träger (15) so positioniert sind, dass die Batteriemodule (3) durch einen Zwischenraum (49) voneinander getrennt sind, und wobei mindestens eines der Löcher (23) in die Achse des Zwischenraums (49) mündet.

3. Gehäuse (5) nach einem der vorhergehenden Ansprüche, wobei die Innenwand (17) flach ist und mit einer ersten der Außenwände (9, 11, 13) den Strömungskanal (21) begrenzt, und wobei, da die Innenwand (17) eine Länge (L) und eine Breite (l) aufweist, die Löcher (23) in der Länge (L) und der Breite (l) der Innenwand (17) verteilt sind.

4. Gehäuse (5) nach dem vorhergehenden Anspruch, wobei die Innenwand (17) und die erste Außenwand (9) flach und parallel sind.

5. Gehäuse (5) nach einem der vorhergehenden Ansprüche, wobei eine zweite Innenwand (27) vorgesehen ist, die mindestens eine Öffnung (33) aufweist und die mit einer zweiten der Außenwände (11) einen zweiten Strömungskanal (31) für das Wärmeträgerfluid (22) begrenzt, der mit der Ausgangsöffnung (35) in Verbindung steht.

6. Gehäuse (5) nach dem vorhergehenden Anspruch, wobei die zweite Innenwand (27) und die zweite Außenwand (11) flach und parallel sind.

7. Kühlsystem (1) für Akkumulatorenbatteriezellen, das enthält:
- ein Gehäuse (5) gemäß einem der vorhergehenden Ansprüche, und
- einen Kühlkreislauf (29), der eine Pumpe (43) und einen Wärmetauscher (45) enthält und der stromaufwärts vor der Pumpe (43) und dem Wärmetauscher (45) mit der Ausgangsöffnung (35) des Gehäuses (5) und stromabwärts hinter der Pumpe (43) und dem Wärmetauscher (45) mit der Eingangsöffnung (24) des Gehäuses (5) verbunden ist.

8. Akkumulatorenbatteriepack (53), der enthält:
- ein Kühlsystem (1) gemäß dem vorhergehenden Anspruch, und
- Akkumulatorenbatteriezellen, die im Gehäuse (5) des Kühlsystems (1) untergebracht sind.

## Claims

1. Casing (5) of a cooling system (1) for storage battery cells, comprising:
- external walls (9, 11, 13) that delimit a sealed housing (7) for said cells, which has an inlet opening (24) and an outlet opening (35) for heat transfer fluid (22), and
- an internal wall (17) that delimits a circulation duct (21) for the heat transfer fluid (22), which communicates with the inlet opening (24),
- the internal wall (17) having a plurality of holes (23) that open into said housing (7),
**characterized in that** the holes (23) have diameters of between 1 mm and 3 mm, such that the heat transfer fluid (22) forms droplets when it passes through the holes (23).

2. Casing (5) according to one of the preceding claims, wherein at least two supports (15) are provided for two battery modules (3) that each accommodate a plurality of storage battery cells, said supports (15) being positioned such that the battery modules (3) are spaced apart from one another by a space (49), and wherein at least one of said holes (23) opens along the axis of said space (49).

3. Casing (5) according to one of the preceding claims, wherein the internal wall (17) is flat and delimits said circulation duct (21) with a first of the external walls (9, 11, 13), and wherein the internal wall (17) has a length (L) and a width (1), the holes (23) being distributed along the length (L) and over the width (1) of the internal wall (17).

4. Casing (5) according to the preceding claim, wherein the internal wall (17) and the first external wall (9) are flat and parallel.

5. Casing (5) according to one of the preceding claims, wherein a second internal wall (27) is provided, which has at least one orifice (33) and which delimits, with a second of the external walls (11), a second circulation duct (31) for the heat transfer fluid (22), which communicates with the outlet opening (35).

6. Casing (5) according to the preceding claim, wherein the second internal wall (27) and the second external wall (11) are flat and parallel.

7. Cooling system (1) for storage battery cells, comprising:
- a casing (5) according to one of the preceding claims, and
- a cooling circuit (29), which comprises a pump (43) and a heat exchanger (45) and is connected, upstream of the pump (43) and of the heat exchanger (45), to the outlet opening (35) of the casing (5), and, downstream of the pump (43) and of the heat exchanger (45), to the inlet opening (24) of the casing (5).

8. Storage battery pack (53) comprising:
- a cooling system (1) according to the preceding claim, and
- storage battery cells accommodated in the casing (5) of the cooling system (1).
